# EUROPÄISCHE PATENTSCHRIFT

(11) **EP 4 001 637 B1**
(45) Veröffentlichungstag und Bekanntmachung des Hinweises auf die Patenterteilung: **01.04.2026**
(21) Anmeldenummer: 21207820.8
(22) Anmeldetag: 11.11.2021
(51) Int. Cl.: F03D 17/00, F03D 80/50, F03D 7/04, B64U 101/30

(54) **VORRICHTUNG UND VERFAHREN ZUR INSPEKTION VON ENERGIEERZEUGUNGSSTRUKTUREN**
DEVICE AND METHOD FOR INSPECTING POWER GENERATION STRUCTURES
DISPOSITIF ET PROCÉDÉ D'INSPECTION DES STRUCTURES DE PRODUCTION D'ÉNERGIE

(30) Priorität: 11.11.2020 LU 102190
(43) Veröffentlichungstag der Anmeldung: 25.05.2022
(73) Patentinhaber: Aero Enterprise GmbH, 4020 Linz (AT)
(72) Erfinder: Hörmann, Robert, 4020 Linz (AT)
(74) Vertreter: Sonnenberg Harrison Partnerschaft mbB

(56) Entgegenhaltungen:
- WO-A1-2018/005882
- WO-A2-2016/141100
- US-A1- 2018 259 955
- US-A1- 2019 137 995

## Beschreibung

### Technisches Gebiet der Erfindung

Diese Anmeldung beansprucht die Priorität der Luxemburg Patentanmeldung Nr. LU 102190, eingereicht am 11. November 2020.

Die Erfindung betrifft eine Vorrichtung und ein Verfahren zur autonomen Inspektion von Energieerzeugungsstrukturen, beispielsweise von Windkraftanlagen mithilfe einer Trägereinheit.

### Hintergrund der Erfindung

Die internationale Patentanmeldung Nr. WO 2019/158 171 A1 (Iversen et. al., VESTAS Wind Systems) beschreibt Systeme und Vorrichtungen für die Wartung von Windkraftanlagen, insbesondere für die Inspektion einer oder mehrerer Windkraftanlagen aus der Luft. Das System umfasst eine Vielzahl von Drohnen oder unbemannten Luftfahrzeugen sowie eine Befehlszentrale. Die Befehlszentrale ist so konfiguriert, dass Flugbahninformationen für eine Vielzahl von Drohnen bestimmt werden, die Flugbahninformationen an die jeweiligen Drohnen übermittelt und die Drohnen diesen Flugbahninformationen folgen. Mindestens eine aus der Vielzahl von Drohnen kann so konfiguriert werden, dass sie Flugbahninformationen autonom anpasst, um eine Windkraftanlage ohne Führung durch den Bediener zu inspizieren. Die Patentanmeldung beschreibt die Erkennung von Anlagenkomponenten der Windraftanlage unter Nutzung der angebrachten Sensoreinheit. Die Nutzung der angebrachten Sensoreinheit zur eigenständigen Erkennung von Schadenbildern an den Anlagenkomponenten findet jedoch keine Erwähnung.

Das US-Patent Nr. US 9,759,200 B2 (Craft et. al., General Electric Company) offenbart ein unbemanntes Flugzeugsystem zur Inspektion von (Windkraft-)Anlagen und eine Methode zur Inspektion dieser Anlagen. Das Flugsystem umfasst eine Sensoreinheit, um Bilder von diesen Anlagen aufzunehmen. Zudem umfasst das Flugsystem ein Speichergerät, um Informationen zu speichern. Das Flugzeugsystem berechnet, unter Nutzung eines Prozessors, in Echtzeit Flugbahninformationen. Dies erfolgt auf Grundlage der zuvor gespeicherten Bilder und der gespeicherten Informationen. Das Patent beschreibt die Nutzung der aufgenommenen Bilder und Sensordaten für die Erzeugung von Flugbahninformationen, zeigt jedoch keine Nutzung der Sensoreinheit für die Schadendetektion an (Windkraft-)Anlagen auf.

Die amerikanische Patentanmeldung Nr. US 2012/136,630 A1 (Murphy et. al., General Electric Company) erläutert ein Verfahren und ein System zur Inspektion einer Windkraftanlage. Das Verfahren umfasst die Bereitstellung mindestens einer ferngesteuerten Flugplattform, die Bereitstellung mindestens einer an der Flugplattform angebrachten Vorrichtung zur zerstörungsfreien Analyse und die Bereitstellung mindestens eines an der Flugplattform angebrachten Entfernungsmesssystems. Das Entfernungsmesssystem wird zur Bestimmung der Entfernung zwischen der Flugplattform und mindestens einem Teil der Windturbine verwendet. Das Verfahren umfasst auch die Positionierung der Flugplattform, so, dass mindestens eine Sensoreinheit Daten erfasst, die für die Inspektion der Windturbine verwendet werden. Der Anmeldung kann keine weitere Beschreibung zum Umgang der Flugplattform mit den Wartungsinformationen entnommen werden.

Die deutsche Patentanmeldung Nr. DE 10 2008 053 928 A1 (Hartmann) beschreibt ein Verfahren zur Inspektion von Rotorblättern an Windkraftanlagen auf Schäden durch Umwelteinflüsse, durch Abnutzung und auf mechanische Beschädigungen. Die Inspektion der Rotorblätter der Windkraftanlagen wird durch die Nutzung optischen Sensorsystemen ausgeführt, wobei die optische Inspektion mit Hilfe einer optisch bestückten Flugdrohne bekannter Bauart ausgeführt wird. Die Flugdrohne erfasst dabei die Rotorblätter der Windkraftanlage aus geringer Entfernung. Die Auswertung kann über eine Bildübertragung zwischen Flugdrohne und Computer stattfinden. Die Patentanmeldung beschreibt nur ein Verfahren für durch einen Nutzer gesteuerte Flugdrohne. Ein Verfahren zur autonomen Steuerung der Flugdrohne ist hingegen nicht offenbart. Ebenso wenig wird auf die Verwendung unterschiedlicher Sensoreinheiten neben konventionellen optischen Kamerasystemen eingegangen.

Die deutsche Patentanmeldung Nr. DE 10 2018 114 310 A1 (Rimkus) beschreibt ein Verfahren zur Außenhaut- und/oder Innenhautinspektion von (Energieerzeugungs-) Strukturen mithilfe zumindest einer Drehflügeldrohne. Die betreffende Oberfläche der (Energieerzeugungs-)Struktur wird mithilfe einer Wärmebildkamera abgetastet. Die aufgenommenen, dreidimensionalen Thermografiedaten werden einer Steuereinheit zur Verknüpfung mit weiteren Wartungsinformationen der (Energieerzeugungs-)Struktur übermittelt. Die Anmeldung behandelt nur die Verwendung von Thermografiedaten und herkömmlichen Bilddaten, die Verwendung einer Sensoreinheiten mit verschiedenen Sensortypen wird hingegen nicht behandelt.

US 2019/137 995 A1 (General Electric) beschreibt ein Anlageninspektionssystem und ein Verfahren zur Anlageninspektion. Das Anlageninspektionssystem umfasst einen Roboter und einen über eine Cloud zugänglichen Server. Der Roboter ist über eine Netzwerkschnittstelle mit der Cloud verbunden und eingerichtet, um Videos, Bilder, LIDAR-Daten, Tiefensensordaten, akustische Daten, spektroskopische Daten oder andere relevante Sensor- oder Kameradaten von einem Vermögensgegenstand wie beispielsweise Energieerzeugungsanlagen, Kommunikationsanlagen, Transportanlagen, Bergbau- oder Untertagepumpanlagen, Fertigungs- oder Bauanlagen zu erfassen. Diese Erfassung der Videos, Bilder und/oder Daten des Vermögensgegenstands erfolgt auf Grundlage eines vordefinierten Flugplans, welcher in einer Komponente zur Aufgabenkonfiguration erzeugt und als Konfigurationsdatei in dem Roboter gespeichert wird.

US 2018/259,955 A1 (General Electric) beschreibt ein System und ein Verfahren zur Integration von Flugbahn- und Standortbetriebsdaten. Das System umfasst Vermögensgegenstand-Controller, der eingerichtet ist, um einen oder mehrere Parameter von Vermögensgegenständen wie beispielsweise Windkraftanlagen zu überwachen. Der Vermögensgegenstand-Controller ist zudem eingerichtet, um den Betrieb der Vermögensgegenstände zu überwachen. Das System umfasst ferner einen Flugbahn-Controller, der eingerichtet ist, um mit einer/mehreren Drohne(n) und dem Vermögensgegenstand-Controller zu kommunizieren und den Betrieb der Vermögensgegenstände mit einem Flugplan der Drohne(n) zu koordinieren, dem die Drohne(n) während einer Inspektion folgen.

WO 2016/141 100 A1 (Prenav Inc.) beschreibt ein System und ein Verfahren zum Nachverfolgen und Fernsteuern von Unbemannten Luftfahrzeugen (UAVs). Die Patentanmeldung ist darauf gerichtet, die Sicherheit von UAVs bei der Verwendung in der Nähe von Gebäuden zu erhöhen, ohne zusätzliche Sensoren auf den UAVs anzuordnen.

WO 2018/005 882 A1 (Unmanned Innovation Inc.) beschreibt ein System und ein Verfahren zum Fernsteuern oder Steuern von Unbemannten Luftfahrzeugen (UAVs). Das Verfahren umfasst ein Erhalten von ersten Sensorinformationen durch ein UAV, wobei die ersten Sensorinformationen physikalische Aspekte einer Windturbine beschreiben, die ein oder mehrere Blätter der Windturbine beinhalten.

### Zusammenfassung der Erfindung

Im Stand der Technik sind verschiedene Vorrichtungen und Verfahren bekannt, die der Untersuchung von Energieerzeugungsstrukturen dienen. Eine Vorrichtung und ein Verfahren zur autonomen Erfassung und Bewertung von Strukturmerkmalen der Energieerzeugungsstrukturen sind hingegen nicht bekannt. Um eine belastbare Aussage über den Zustand von oftmals schwer zugänglichen Energieerzeugungsstrukturen erhalten zu können, werden daher in der vorliegenden Anmeldung eine Vorrichtung und eine Verfahren zur selbstständigen Erfassung, Kategorisierung und Prognose des Wartungsbedarfs von Energieerzeugungsstrukturen auf Grundlage von über eine Sensoreinheit erfassten Strukturmerkmalen vorgestellt. Die Erfindung beschreibt eine Vorrichtung zur autonomen Inspektion von Energieerzeugungsstrukturen gemäß Anspruch 1 und ein Verfahren zur Berechnung von Bahninformationen gemäß Anspruch 7.

Die vorliegende Vorrichtung umfasst eine Trägereinheit und eine Befehlszentrale zur Erfassung und Bewertung von aktuellen Strukturinformationen von Energieerzeugungsstrukturen. Die vorliegende Vorrichtung kann auch weitere Datenquellen wie beispielsweise Foto- oder Videoaufnahmen zusätzlicher Geräte für die Erfassung von aktuellen Strukturinformationen umfassen. Die Trägereinheit umfasst eine Sensoreinheit, eine Steuereinheit und eine Kommunikationseinheit. Die Sensoreinheit erfasst, unterschiedliche Sensortypen nutzend, aktuelle Strukturinformationen von den Energieerzeugungsstrukturen. Die Sensoreinheit erkennt, bewertet, klassifiziert und speichert die aktuellen Strukturinformationen einen zweiten Prozessor und einen zweiten Speicher nutzend. Die Strukturinformationen umfassen dabei das Strukturmerkmal sowie die Strukturposition relativ zu den Energieerzeugungsstrukturen. Die Steuereinheit umfasst Bahninformationen zur Bestimmung einer Bahn der Trägereinheit. Die Steuereinheit umfasst ein Kalibrierungsmodul. Das Kalibrierungsmodul umfasst ein Element zur Bestimmung einer barometrischen Höhe und einer geometrischen Höhe und/oder ein Element zur Überlagerung der Bahninformationen mit durch die Sensoreinheit erzeugten Positionsinformationen.

In einem nicht beanspruchten Beispiel wird ein Verfahren zur Auswertung von Strukturinformationen der Energieerzeugungsstrukturen dargestellt. Das Verfahren umfasst das Erfassen der Strukturinformationen, die Ermitteln von Zustandsänderungen der aktuellen Strukturinformationen mit den in einer Datenbank gespeicherten historischen Strukturinformationen sowie das Berechnen von prognostizierten Strukturinformationen der Energieerzeugungsstrukturen.

In einem nicht beanspruchten Beispiel wird ein Verfahren zur Berechnung eines Datenmodells für die Prognose technischer Maßnahmen an den Energieerzeugungsstrukturen dargestellt. Das Verfahren umfasst das Einlesen einer Vielzahl von aktuellen Strukturinformationen und historischen Strukturinformationen in einem Datenmodell. Das Verfahren umfasst weiter das Ermitteln von Zustandsänderungen zwischen den aktuellen Strukturinformationen und den in einer Merkmaldatenbank gespeicherten historischen Strukturinformationen. Durch einen Maschinenlern-Algorithmus werden die Zustandsänderungen mit einem Klassifikationsschema korreliert und das Datenmodell für die Prognose technischer Maßnahmen berechnet.

Weiter wird ein Verfahren zur Berechnung von Bahninformationen für die Steuerung der Trägereinheit dargestellt. Das Verfahren umfasst das Erhalten von Bahninformationen von der Befehlszentrale, das Anpassen der Bahninformationen durch die Steuereinheit und das Kalibrieren von Bahninformationen durch ein Kalibrierungsmodul.

### Beschreibung der Figuren

Fig. 1 ist eine Seitenansicht der Vorrichtung zur autonomen Inspektion von Energieerzeugungsstrukturen.
Figs. 2A und 2B sind Prozessablauf-Diagramme des Verfahrens zur Auswertung von Energieerzeugungsstrukturen.
Fig. 3 ist ein Prozessablauf-Diagramm des Verfahrens für eine Prognose technischer Maßnahmen für die Energieerzeugungsstrukturen.
Fig. 4 ist ein Prozessablauf-Diagramm des Verfahrens zur Berechnung von Bahninformationen der Trägereinheit.

### Detaillierte Beschreibung der Erfindung

Die Erfindung wird nun auf der Grundlage der Zeichnungen beschrieben. Es wird davon ausgegangen, dass die hier beschriebenen Ausführungsformen und Aspekte der Erfindung nur Beispiele sind und den Schutzumfang der Ansprüche in keiner Weise einschränken. Die Erfindung wird durch die Ansprüche definiert. Es wird davon ausgegangen, dass Merkmale eines Aspekts oder einer Ausführungsform der Erfindung mit einem Merkmal eines anderen Aspekts oder anderer Aspekte und/oder Ausführungsformen der Erfindung kombiniert werden können.

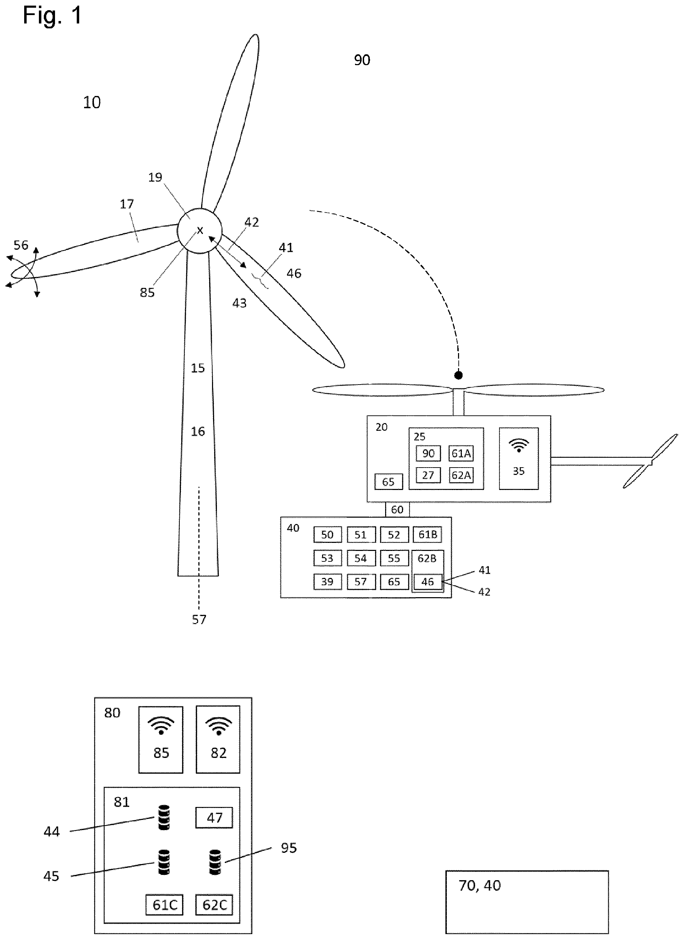

Fig. 1 zeigt eine erste Ausführungsform der Vorrichtung 10 zur autonomen Inspektion von Energieerzeugungsstrukturen 15. Die Vorrichtung 10 umfasst eine Trägereinheit 20 und eine Befehlszentrale 80. Zudem kann die Vorrichtung 10 weitere Datenquellen 70 umfassen. In Fig. 1 ist eine Windkraftanlage 16 mit Rotorflügen 17 und einer Rotornabe 19 als Energieerzeugungsstruktur 15 dargestellt. Die Vorrichtung 10 kann auch für andere Energieerzeugungsstrukturen 15, wie Staudämme oder Kraftwerke verwendet werden.

Die Trägereinheit 20 umfasst eine an der Trägereinheit 20 bereitgestellte Sensoreinheit 40, eine an der Trägereinheit 20 bereitgestellte Steuereinheit 25 und eine an der Trägereinheit 20 bereitgestellte erste Kommunikationseinheit 35. Die Trägereinheit 20 ist beispielsweise ein unbemanntes Fluggerät - auch als Drohne bekannt - oder ein Wasser- oder Landfahrzeug. Die Sensoreinheit 40 kann, wie später beschrieben wird, beispielsweise auch von einer Person in Form eines portablen Systems zur Untersuchung der Energieerzeugungsstrukturen 15 getragen werden. Die Trägereinheit 20 kann weiter eine Beleuchtung 65 umfassen, die beispielsweise zur Erkennung der Trägereinheit 20 dienen und als Positionslicht ausgeführt sein kann. Die Beleuchtung 65 kann zudem auch für die Beleuchtung von Energieerzeugungsstrukturen 15 verwendet werden.

Die Sensoreinheit 40 ist z.B. über eine Aufhängung 60 mit der Trägereinheit 20 verbunden und umfasst einen Optiksensor 51, einen Wärmesensor 50, einen Laserdistanzsensor 55, einen Radarsensor 52, einen Ultraschallsensor 53, einen elektrochemischen Sensor 54 und/oder eine Beleuchtung 65. Die Beleuchtung 65 umfasst beispielsweise ein Blitzlicht oder eine andere Beleuchtungsquelle, um die Verwendbarkeit der Sensoreinheit 40 bei Dunkelheit oder ungenügender Ausleuchtung zu gewährleisten. Die Sensoreinheit 40 umfasst weiter einen zweiten Prozessor 61B verbunden mit einem zweiten Speicher 62B und eine Sensorsteuerung 39. Der zweite Prozessor 61B wird für die Auswertung der von der Sensoreinheit 40 erfassten aktuellen Strukturinformationen 46 verwendet. Der zweite Speicher 62B speichert die erfassten aktuellen Strukturinformationen 46. Durch die Speicherung der erfassten aktuellen Strukturinformationen 46 auf dem zweiten Speicher 62B kann es vermieden werden, große durch die Sensoreinheit 40 erfasste Datenmengen während der Inspektion von Energieerzeugungsstrukturen 15 zu übertragen bzw. übertragen zu müssen. Die Sensorsteuerung 39 steuert die Position der Sensoreinheit 40 relativ zu der Trägereinheit 20, die Aufhängung 60 nutzend. Die aktuellen Strukturinformationen 46 umfassen eine Vielzahl unterschiedlicher Arten von Auffälligkeiten wie Beschädigungen an der Außenhaut der Energieerzeugungsstrukturen 15 wie beispielsweise Blitzschäden, Frostschäden, Rost, Vandalismusschäden, Schäden durch Tiere oder auch Wind- und Wetterschäden. Die aktuellen Strukturinformationen 46 können weiter auch Beschädigungen innerhalb der Energieerzeugungsstrukturen 15 umfassen, wie beispielsweise Bruch, Risse, Delamination, Wassereinbrüche oder auch Material- und Werkstofffehler.

Die Steuereinheit 25 umfasst einen ersten Prozessor 61A verbunden mit einem ersten Speicher 62A sowie ein Kalibrierungsmodul 27. Der erste Prozessor 61A wird zur Berechnung von Bahninformationen 90 verwendet. Das Kalibrierungsmodul 27 umfasst ein Element zur Überlagerung der Bahninformationen 90 mit durch die Sensoreinheit 40 erzeugten Positionsinformationen 85 sowie ein Element zur Bestimmung einer barometrischen Höhe und einer geometrischen Höhe. Die Steuereinheit 25 empfängt über die erste Kommunikationseinheit 35 die Bahninformationen 90 von einer Befehlszentrale 80, wobei die Bahninformationen 90 zur Bestimmung der Bahn der Trägereinheit verwendet werden und beispielsweise globale Navigationssatellitensystem-Daten (engl.: Global Navigation Satellite System-Daten, auch GNSS-Daten genannt) oder Vektorkoordinaten umfassen. Die Steuereinheit 25 kann, unter Verwendung der von der Sensoreinheit 40 und dem Kalibrierungsmodul 27 erfassten Informationen, die Bahninformationen 90 autonom anpassen.

Die Sensoreinheit 40 erkennt beispielsweise über den Optiksensor 51 oder den Laserdistanzsensor 55 eine erste Ausrichtung 56 oder eine erste Position 57 der Energieerzeugungsstruktur 15 wie beispielsweise die Ausrichtung des Rotorflügels 17 der Windkraftanlage 16 sowie die Position einer Windkraftanlage 16 oder eines anderen Merkmals der Energieerzeugungsstruktur 15. Das Kalibrierungsmodul 27 überlagert die durch die Sensoreinheit 40 erzeugten Positionsinformationen 85 mit den empfangenen Bahninformationen 90 und ermittelt daraus Abweichungen. Die Steuereinheit 25 nutzt die ermittelten Abweichungen zur Korrektur der in dem ersten Speicher 62A gespeicherten Bahninformationen 90. Die erste Kommunikationseinheit 35 kann weiter dazu genutzt werden, die durch die Sensoreinheit 40 erfassten Daten während der Inspektion von Energieerzeugungsstrukturen 15 an die Befehlszentrale 80 zu übertragen. Um die Menge der übertragenen Daten zu reduzieren, werden nur die Daten von einem der an der Sensoreinheit 40 angebrachten Sensoren wie beispielwiese die Daten erzeugt von dem Optiksensor 51 an die Befehlszentrale 80 zu übertragen. Die Übertragung kann zudem in reduzierter Qualität erfolgen, um das Datenvolumen zu minimieren aber gleichzeitig eine Möglichkeit zur Kontrolle der Position der Trägereinheit 20 zu geben. Auch kann auf diese Weise die Funktionen der verschiedenen Sensoren geprüft und bei Bedarf angepasst werden. Zum Beispiel kann der Fokus der optischen Sensor 51 durch Ablesen einer Buchstaben- und Zahlkombination an der Windkraftanlage 16 kontrolliert werden.

Die Sensorsteuerung 39 steuert die Position der Sensoreinheit 40 relativ zu der Trägereinheit 20, die Aufhängung 60 nutzend, wenn die Sensoreinheit 40 in einem ungeeigneten Winkel oder einer ungeeigneten Position relativ zu der Energieerzeugungsstruktur 15 ausgerichtet ist. Dies kann beispielsweise der Fall sein, wenn der Blickwinkel des Optiksensors 51 relativ zu einer Oberfläche der Energieerzeugungsstruktur 15 wie dem Rotorflügel 17 der Windkraftanlage 16 außerhalb eines vorteilhaften Bereichs liegt und die Erkennung der Strukturmerkmale 41 nur erschwert oder gar nicht möglich ist. Der Anpassungsbereich der Aufhängung 60 beträgt üblicherweise +/- 15° relativ zur Normalposition der Aufhängung 60. Wird durch eine Anpassung der Position der Aufhängung 60 der notwendigen Blickwinkel der Sensoreinheit 40 relativ zu einer Oberfläche der Energieerzeugungsstruktur 15 nicht erreicht, passt die Steuereinheit 25 die Bahninformationen 90 entsprechend an.

Die Vorrichtung 10 umfasst weiter die Befehlszentrale 80, wobei die Befehlszentrale 80 über eine zweite Kommunikationseinheit 82 mit der ersten Kommunikationseinheit 35 verbunden ist. Für die Kommunikation kann beispielsweise eine kabelgebundene oder kabellose Kommunikationstechnik, wie beispielsweise ein Mobilfunknetz unter Verwendung von z.B. dem Kommunikationsstandard GSM, EDGE, LTE, 4G oder 5G, verwendet werden. Die Befehlszentrale 80 umfasst einen eine Merkmaldatenbank 45 und historische Strukturinformationen 47 umfassenden Befehlscomputer 81. Der Befehlscomputer 81 umfasst einen dritten Prozessor 61C verbunden mit einem dritten Speicher 62C. Der dritte Prozessor 61C wird für die Berechnung von den Bahninformationen 90 sowie die Auswertung von den historischen Strukturmerkmalen 47 verwendet. Der dritte Speicher 62C wird für die Speicherung der Bahninformationen 90 und der Merkmaldatenbank 45 verwendet. Die historischen Strukturinformationen 47 umfassen erfasste Strukturmerkmale 41 und erfasste Merkmalpositionen 42 von der Energieerzeugungsstruktur 15 die in der Merkmaldatenbank 45 gespeichert sind. Das Merkmaldatenbank 45 enthält somit alle durch die Sensoreinheit 40 oder die weiteren Datenquellen 70 erfassten Strukturmerkmale 41 in einem beispielsweise virtuellen, computerbasiertem 3D oder 4D-Modell, einem sogenannten virtuellen Abbild 95. In der Merkmaldatenbank 45 kann für die Strukturmerkmale 41 ein zeitlicher Verlauf der Strukturmerkmale 41, also die Zustandsänderungen 43, ermittelt und angezeigt werden. Die Merkmaldatenbank 45 ermöglicht es zudem, nur historische Strukturinformationen 47, d.h. einen zeitlich zurückliegenden Zustand der Energieerzeugungsstrukturen 15 darzustellen.

Die weitere Datenquelle 70 der vorliegenden Vorrichtung 10 umfasst zusätzliche Sensoreinheiten 40 mit unterschiedlichen Typen von Sensoren, wie beispielsweise dem Optiksensor 51 oder dem Ultraschallsensor 53, die Informationen an die Befehlszentrale 80 über eine kabellose oder kabelgebundene Verbindung oder auch ein Speichermedium übermitteln können. Beispielsweise können durch einen weiteren Optiksensor 51, wie einer Kamera, zusätzliche Bild- oder Videoaufnahmen als aktuelle Strukturinformationen 46 aufgenommen und and die Befehlszentrale 80 übermittelt werden.

Der weitere Optiksensor 51 kann beispielsweise auch die Kamera eines Smartphones sein, die zusätzliche aktuelle Strukturinformationen 46 erfasst und an die Befehlszentrale 80 (beispielsweise über Mobilfunk) übermittelt. Die zusätzlichen Sensoreinheiten 40 können auch eine Vielzahl anderer Sensortypen zu Erfassung der aktuellen Strukturinformationen 46 sein, die von einer Person getragen werden oder an einem Handgestell angebracht sind.

Die Befehlszentrale 80 ist, die Merkmaldatenbank 45 nutzend, in der Lage, die zusätzlichen aktuellen Strukturinformationen 46 mit den bereits in der Merkmaldatenbank 45 vorhandenen historische Strukturinformationen 47 zu vergleichen und die Merkmaldatenbank 45 mit den zusätzlichen aktuellen Strukturinformationen 46 zu überlagern. Auch wäre es möglich, Aufnahmen einer Unterwasserkamera oder von Sonardetektoren in die Merkmaldatenbank 45 mit aufzunehmen. Dies kann beispielsweise bei der Inspektion von Fundamenten der Windkraftanlagen 16 oder aber bei der Inspektion von Staudämmen vorteilhaft sein.

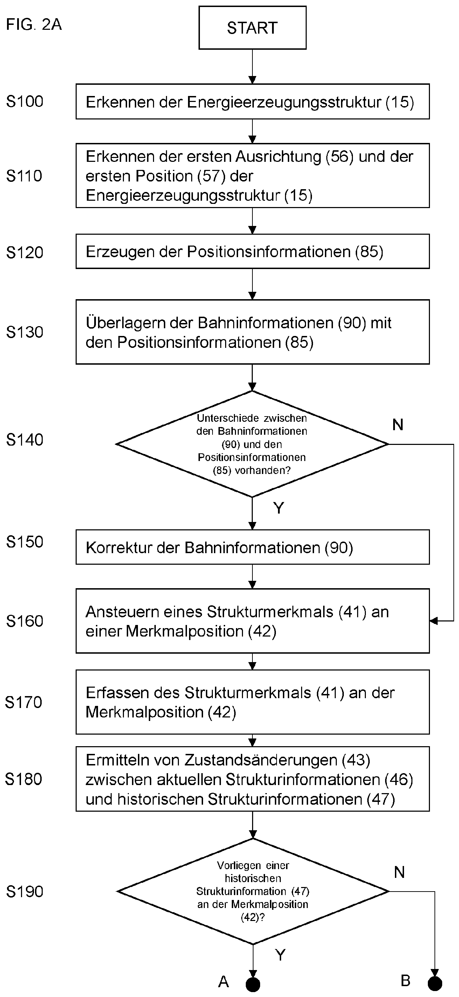

Fig. 2A zeigt ein Prozessablauf-Diagramm des Verfahrens zur Auswertung der Energieerzeugungsstrukturen 15. In Schritt S100 wird zuerst eine Route für die Trägereinheit (Drohne) zwischen einer Basisstation z.B. einem Schiff, und der Energieerzeugungsstruktur 15 z.B. eine Windenergieanlage mit mehreren Windkraftanlagen 16. Die Trägereinheit wird im Schritt S105 auf der Reise versandt und die Sensoreinheit 40 erkennt die Energieerzeugungsstruktur 15 oder zumindest eine der Windkraftanlagen 16 in der Windenergieanlage. In Schritt S110 erkennt die Sensoreinheit 40 eine erste Ausrichtung 56 und eine erste Position 57 der Rotorflügel 17 der Windkraftanlage 16. Ausgehend von der erkannten ersten Ausrichtung 56 und der erkannten ersten Position 57 erzeugt die Sensoreinheit 40 in Schritt S120 die Positionsinformationen 85. Das Kalibrierungsmodul 27 überlagert in Schritt S130 die Bahninformationen 90 mit den erzeugten Positionsinformationen 85 sowie der bestimmten barometrischen Höhe und der bestimmten geometrischen Höhe. In Schritt S140 vergleicht das Kalibrierungsmodul 27 die ermittelte Position relativ zu der Windkraftanlage 16 mit den empfangenen Bahninformationen 90. Liegt eine Abweichung zwischen der ermittelten Position und den empfangenen Bahninformationen 90 vor, korrigiert das Kalibrierungsmodul 27 die empfangenen Bahninformationen 90 in Schritt S150. Hierfür kann das Kalibrierungsmodul 27 beispielsweise ein örtliches Bezugssystem mit Bezug zu den erkannten Positionsinformationen 85 für die Kalibrierung der Bahninformationen 90 erzeugen. Das Kalibrierungsmodul 27 kann weiter auch oder auch Positionsinformation 85 aus einem GNSS System beziehen oder über örtliche verfügbare Echtzeitkinematik (engl.: Real-Time Kinematik, auch RTK genannt) Korrekturen vornehmen. Zur Erzeugung eines örtlichen Bezugssystems eignet sich im Falle von Windkraftanlagen zum Beispiel die Rotornabe 19 der Windkraftanlage 16.

Die Kalibrierung der Bahninformationen 90 kann auch eine simultane Positionsbestimmung und Kartenerstellung unterstützt werden (engl. SLAM: Simultaneous Localization and Mapping). So kann das Kalibrierungsmodul 27 die von der Sensoreinheit 40 erfassten Informationen nutzen, um eigenständig eine Umgebungskarte aufzubauen und die Position der Trägereinheit 20 relativ zu Referenzobjekten wie einer oder mehrerer Energieerzeugungsstrukturen 15 zu erfassen. Umfasst die Sensoreinheit 40 weiter Sensoren zur Kollisionserkennung, kann die Steuereinheit Kollisionen mit anderen Objekten erkennen und vermeiden. Hierdurch wird ein Betrieb der Trägereinheit 20 jenseits des Sichtbereichs eines Bedieners ermöglicht (engl. BVLOS: Beyond-Visual-Line-Of-Sight). Die ist vor allem bei der Analyse schwer erreichbarer oder weitläufiger Energieerzeugungsstrukturen 15 z.B. Windkraftanlagen 16 auf hoher See vorteilhaft. Zusätzlich kann die Trägereinheit 20 auch eine Kommunikationseinheit zur Satellitenkommunikation aufweisen. Dieses sog. Satellitenfunksystem kann beispielsweise verwendet werden, um eine redundante Kommunikation zwischen der Trägereinheit 20 und der Befehlszentrale 80 sicherzustellen. Für diese Kommunikation können, ohne die Erfindung einzuschränken, gängige Satellitenfunksysteme wie beispielsweise SatCom, InmarSat oder Iridium verwendet werden.

Das beschriebene Vorgehen aus Schritt S150 ermöglicht es zudem, bei Windkraftanlagen die aktuelle Position der Rotorflügel 17 und die Ausrichtung der Rotorflügel 17 relativ zur einer Rotornabe 19 zu erkennen und die Flugbahninformationen entsprechend der erkannten Position und Ausrichtung zu korrigieren. Auch ermöglicht dieses Vorgehen, bestimmte Bezugspunkte einer Windkraftanlage wie Schriftzüge, Logos oder Markierungen zu erkennen, die ebenfalls zur Korrektur der Flugbahninformationen herangezogen werden können. Im vorliegenden Beispiel der Windkraftanlagen wird das Kalibrierungsmodul 27 üblicherweise über die von der Sensoreinheit 40 erkannte Position der Rotornabe 19 der Windkraftanlage 16 kalibriert. Liegt keine Abweichung vor, wird Schritt S160 ausgeführt. In Schritt S160 steuert die Steuereinheit 25 die Trägereinheit 20, die korrigierten Bahninformationen 90 nutzend, entlang der Energieerzeugungsstruktur 15. Die Sensoreinheit 40 erfasst in Schritt S170 die aktuellen Strukturinformationen 46 der Energieerzeugungsstruktur 15. Zu den erfassten aktuellen Strukturinformationen 46 werden die Strukturmerkmale 41 und die Merkmalpositionen 42 in dem zweiten Speicher 62B gespeichert.

In Schritt S180 werden die aktuellen Strukturinformationen 46 durch ein in dem Befehlscomputer 81 gespeichertes Klassifikationsschema 44 klassifiziert. Das Klassifizieren umfasst beispielsweise das Erkennen von mechanischen Beschädigungen an Rotorblättern einer Windkraftanlage verursacht durch einen Blitzschlag und das Einordnen der erfassten aktuellen Strukturinformation 46 als eine Beschädigung durch Blitzschlag. Die Klassen des Klassifikationsschemas 44 können je Typ der Energieerzeugungsstruktur 15 unterschiedlich sein. Beispielsweise werden zur Klassifikation eines Kraftwerksgebäudes andere Klassen herangezogen als zur Klassifikation einer Windkraftanlage. Für die Klassifikation der erfassten aktuellen Strukturinformationen 46 werden Aufnahmen von unterschiedlichen Sensortypen der Sensoreinheit von dem zweiten Prozessor 61B überlagert. Die Überlagerung ermöglicht eine differenzierte Klassifikation, da beispielsweise von dem Optiksensor 51 und dem Ultraschallsensor 53 erfasste Strukturmerkmale 41 in Kombination miteinander betrachtet und klassifiziert werden. In einer weiteren Ausführungsform der vorliegenden Vorrichtung 10 kann das Klassifikationsschema 44 durch einen Maschinenlern-Algorithmus, die erfassten aktuellen Strukturinformationen 46 nutzend, aktualisiert werden. Der Maschinenlern-Algorithmus kann beispielsweise ein Überwachtes-Lernen Algorithmus, ein Unüberwachtes-Lernen Algorithmus oder ein Bestärkendes-Lernen Algorithmus sein.

In Schritt S180 werden die erfassten aktuellen Strukturinformationen 46 mit den historischen Strukturinformationen 47 verglichen und die Zustandsänderungen 43 der Strukturmerkmale 41 an den Merkmalpositionen 42 durch den Befehlscomputer 81 ermittelt. In Schritt S190 wird je erfasster aktueller Strukturinformation 46 durch den Befehlscomputer 81 verglichen, ob an der dem Strukturmerkmal 41 zugehörigen Merkmalposition 42 bereits eine historische Strukturinformationen 47 erfasst ist.

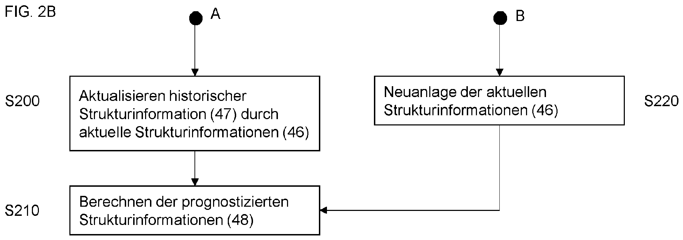

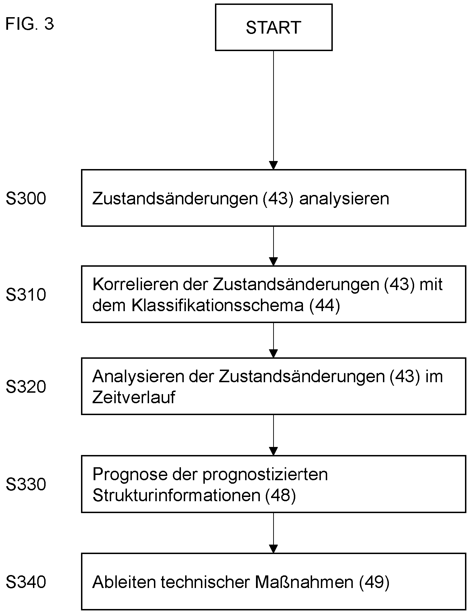

Liegt in der Merkmaldatenbank 45 eine historische Strukturinformation 47 vor, wird die historische Strukturinformation 47 in Schritt S200 durch den Befehlscomputer 81, die aktuellen Strukturinformationen 46 nutzend, aktualisiert und in der Merkmaldatenbank 45 gespeichert, wie in Fig. 2B dargestellt. Die Merkmaldatenbank 45 umfasst somit ein Abbild der an der Energieerzeugungsstruktur 15 zu einem Zeitpunkt (t) ermittelten aktuellen Strukturinformationen 46. In Schritt S210 werden die prognostizierten Strukturinformationen 48 der Energieerzeugungsstruktur 15 durch den Befehlscomputer 81 unter Verwendung des Klassifikationsschemas 44 berechnet. Die prognostizierten Strukturinformationen 48 umfassen prognostizierte zukünftige Eigenschaften der Strukturmerkmale 41, wie beispielsweise eine zukünftige Schadenskritikalität, eine strukturelle Relevanz für die Stabilität der Energieerzeugungsstruktur 15 oder auch eine Sicherheitsrelevanz (siehe Beschreibung Fig. 3).

Liegt (in Anschluss an den Schritt S190 aus Fig. 2A) in der Merkmaldatenbank 45 keine historische Strukturinformation 47 vor, wird die aktuelle Strukturinformationen 46 in Schritt S220 durch den Befehlscomputer 81 in der Merkmaldatenbank 45 gespeichert, wie in Fig. 2B dargestellt. Anschließend wird, wie bereits beschrieben, der Schritt S210 durchlaufen.

Fig. 3 ist ein Prozessablauf-Diagramm des Verfahrens für eine Prognose technischer Maßnahmen 49 für die Energieerzeugungsstrukturen 15. In Schritt S300 analysiert der Befehlscomputer 81 die Zustandsänderungen 43 für die Strukturmerkmale 41 an den Merkmalpositionen 42. In Schritt S310 korreliert der Befehlscomputer 81, einen Maschinenlern-Algorithmus nutzend, die Zustandsänderungen 43 mit dem Klassifikationsschema 44. Der Maschinenlern-Algorithmus kann beispielsweise ein Überwachtes-Lernen Algorithmus, ein Unüberwachtes-Lernen Algorithmus oder ein Bestärkendes-Lernen Algorithmus sein. Der Befehlscomputer 81 analysiert in Schritt S320, den Maschinenlern-Algorithmus nutzend, beispielsweise je Klasse des Klassifikationsschemas 44, den Schadenverlauf der Strukturmerkmale 41 an den Energieerzeugungsstrukturen 15. Durch die Analyse des Schadenverlaufs prognostiziert in Schritt S330 der Befehlscomputer 81 die Wahrscheinlichkeit einer Veränderung der Strukturmerkmale 41 der jeweiligen Schadenklassen. Von dem Befehlscomputer 81 werden in Schritt S340, den prognostizierten Schadenverlauf nutzend, technische Maßnahmen 49 definiert. Die technischen Maßnahmen 49 umfassen eine Maßnahmenart 49A und einen Maßnahmenzeitpunkt 49B. Die Maßnahmenart 49A ist beispielsweise die Art und die Kritikalität der auszuführenden Tätigkeit zur Instandhaltung der Energieerzeugungsstruktur 15. Der Maßnahmenzeitpunkt 49B ist der Zeitpunkt, ab dem beispielsweise auf Grundlage der Prognose eine dauerhafte oder sicherheitsrelevante Beschädigung der Energieerzeugungsstruktur 15 zu erwarten ist und vor dem die Instandhaltungsmaßnahme durchgeführt werden muss.

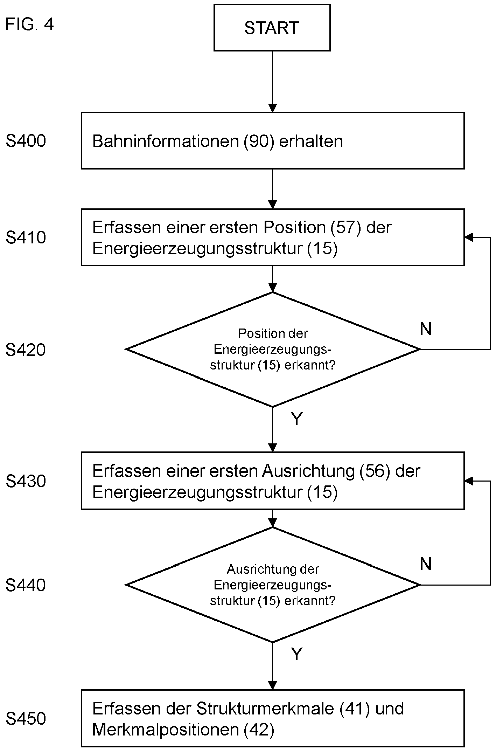

Fig. 4 ist ein Prozessablauf-Diagramm des Verfahrens zur Berechnung von Bahninformationen 90 der Trägereinheit 20. In Schritt S400 erhält die Steuereinheit 25 der Trägereinheit 20 die Bahninformationen 90 von der Befehlszentrale 80. In Schritt S410 erfasst die Sensoreinheit 40 die erste Position 57 der Energieerzeugungsstruktur 15. In Schritt S420 wird überprüft, ob eine ersten Position 57 der Energieerzeugungsstruktur 15 erkannt wurde. Wurde eine erste Position 57 erkannt, erfasst die Sensoreinheit 40 in Schritt S430 eine erste Ausrichtung 56 der Energieerzeugungsstruktur 15. Wurde in Schritt S420 keine erste Position 57 erkannt, wird Schritt S410 erneut ausgeführt. In Schritt S440 wird überprüft, ob eine ersten Ausrichtung 56 der Energieerzeugungsstruktur 15 erkannt wurde. Wurde eine erste Ausrichtung 56 erkannt, erfasst die Sensoreinheit 40 in Schritt S450, die Strukturmerkmale 41 und die Merkmalpositionen 42. Wurde in Schritt S440 keine erste Ausrichtung 56 erkannt, wird Schritt S410 erneut ausgeführt.

## Patentansprüche

1. Vorrichtung (10) zur autonomen Inspektion von Energieerzeugungsstrukturen (15), wobei die Vorrichtung (10) umfasst:
eine an einer Trägereinheit (20) angebrachte Sensoreinheit (40) zur Erfassung von aktuellen Strukturinformationen (46) über die Energieerzeugungsstrukturen (15);
eine an der Trägereinheit (20) angebrachte, mit einer ersten Kommunikationseinheit (35) verbundene Steuereinheit (25), wobei die Steuereinheit (25) Bahninformationen (90) zur Bestimmung einer Bahn der Trägereinheit (20) umfasst, und wobei die Steuereinheit (25) einen ersten Prozessor (61A) verbunden mit einem ersten Speicher (62A) und ein Kalibrierungsmodul (27) umfasst,;
eine Befehlszentrale (80) verbindbar mit der ersten Kommunikationseinheit (35);
historische Strukturinformationen (47) gespeichert in einem Befehlscomputer (81) angebracht in der Befehlszentrale (80); und
eine Merkmaldatenbank (45) mit historischen Strukturinformationen (47) der inspizierten Energieerzeugungsstrukturen (15),
wobei,
der erste Prozessor (61A) zur Berechnung von Bahninformationen (90) verwendet wird,
das Kalibrierungsmodul (27) ein Element zur Bestimmung einer barometrischen Höhe und einer geometrischen Höhe und/oder ein Element zur Überlagerung der Bahninformationen (90) mit durch die Sensoreinheit (40) erzeugten Positionsinformationen (85) umfasst, und
und das Kalibrierungsmodul (27) die durch die Sensoreinheit (40) erzeugten Positionsinformationen (85) mit den empfangenen Bahninformationen (90) überlagern kann und daraus Abweichungen ermitteln kann, wobei die Steuereinheit (25) die ermittelten Abweichungen zur Korrektur der in dem ersten Speicher (62A) gespeicherten Bahninformationen (90) nutzen kann,
und wobei das Kalibrierungsmodul (27) ein örtliches Bezugsystem mit Bezug zu den erkannten Positionsinformationen (85) für die Kalibrierung der Bahninformationen (90) erzeugen kann.

2. Vorrichtung (10) nach Anspruch 1, wobei
die Sensoreinheit (40), mindestens eines von einem Optiksensor (51), einem Wärmesensor (50), einem Laserdistanzsensor (55), einem Radarsensor (52), einem Ultraschallsensor (53), einem elektrochemischen Sensor (54) oder einer Beleuchtung (65) umfasst.

3. Vorrichtung (10) nach Ansprüchen 1 und 2, wobei
die Sensoreinheit (40) weiter ein Modul zur Erkennung einer ersten Ausrichtung (56) und einer ersten Position (57) der Energieerzeugungsstrukturen (15) umfasst.

4. Vorrichtung (10) nach jedem der vorherigen Ansprüche, wobei
die Sensoreinheit (40) eine Sensorsteuerung (39) für eine Anpassung einer Ausrichtung der Sensoreinheit (40) relativ zu der Trägereinheit (20) umfasst; und
eine Anpassung von Bahninformationen (90) durch die Sensorsteuerung (39) vorgenommen werden kann.

5. Vorrichtung (10) nach jedem der vorherigen Ansprüche, wobei
die Sensoreinheit (40) einen zweiten Speicher (62B) für eine Speicherung von Merkmaldaten von den aktuellen Strukturinformationen (46) der Energieerzeugungsstrukturen (15) umfasst.

6. Vorrichtung (10) nach jedem der vorherigen Ansprüche, wobei
die Steuereinheit (25) aktuelle Strukturinformationen (46) der Energieerzeugungsstruktur (15) umfasst; und
die aktuellen Strukturinformationen (46) mindestens eines von Strukturmerkmalen (41) und den Merkmalpositionen (42) umfassen.

7. Verfahren zur Berechnung von Bahninformationen (90), wobei das Verfahren umfasst:
Erhalten von Bahninformationen (90) durch eine Steuereinheit (25) von einer ersten Kommunikationseinheit (35) erzeugt von einer Befehlszentrale (80);
Anpassen von den Bahninformationen (90) einer Trägereinheit (20) durch die Steuereinheit (25), wobei die Steuereinheit (25) einen ersten Prozessor (61A) verbunden mit einem ersten Speicher (62A) und ein Kalibrierungsmodul (27) umfasst;
Erfassen einer Ausrichtung (56) von Energieerzeugungsstrukturen (15) durch eine Sensoreinheit (40);
Auswerten von der Ausrichtung (56) durch ein Kalibrierungsmodul (27); und
Kalibrieren von den Bahninformationen (90), mindestens eine Ortsangabe und eine Richtung umfassend, durch das Kalibrierungsmodul (27),
wobei
das Kalibrierungsmodul (27) ein Element zur Bestimmung einer barometrischen Höhe und einer geometrischen Höhe und/oder ein Element zur Überlagerung der Bahninformationen (90) mit durch die Sensoreinheit (40) erzeugten Positionsinformationen (85) umfasst, und
wobei das Kalibrierungsmodul (27) die durch die Sensoreinheit (40) erzeugten Positionsinformationen (85) mit den empfangenen Bahninformationen (90) überlagert und daraus Abweichungen ermittelt, und
die Steuereinheit (25) die ermittelten Abweichungen zur Korrektur der in dem ersten Speicher (62A) gespeicherten Bahninformationen (90) nutzt,
und wobei das Kalibrierungsmodul (27) ein örtliches Bezugsystem mit Bezug zu den erkannten Positionsinformationen (85) für die Kalibrierung der Bahninformationen (90) erzeugt.

## Claims

1. An apparatus (10) for autonomous inspection of power generating structures (15), the apparatus (10) comprising:
a sensor unit (40) mounted to a carrier unit (20) for acquiring current structure information (46) about the power generating structures (15);
a control unit (25) mounted to the carrier unit (20) and connected to a first communication unit (35), wherein the control unit (25) comprises trajectory information (90) for determining a trajectory of the carrier unit (20), and wherein the control unit (25) comprises a first processor (61A) connected to a first memory (62A) and a calibration module (27);
a command center (80) connectable to the first communication unit (35);
historical structure information (47) stored in a command computer (81) mounted in the command center (80); and
a feature database (45) with historical structure information (47) of the inspected power generating structures (15),
wherein,
the first processor (61A) is used for calculating trajectory information (90),
the calibration module (27) comprises an element for determining a barometric height and a geometric height and/or an element for superimposing the trajectory information (90) with position information (85) generated by the sensor unit (40), and
the calibration module (27) can superimpose the position information (85) generated by the sensor unit (40) with the received trajectory information (90) and can determine deviations therefrom, wherein the control unit (25) can use the determined deviations for correction of the trajectory information (90) stored in the first memory (62A),
and wherein the calibration module (27) can generate a local reference system with respect to the detected position information (85) for the calibration of the trajectory information (90).

2. The apparatus (10) according to claim 1, wherein
the sensor unit (40) comprises at least one of an optical sensor (51), a thermal sensor (50), a laser distance sensor (55), a radar sensor (52), an ultrasonic sensor (53), an electrochemical sensor (54) or an illumination (65).

3. The apparatus (10) according to claims 1 and 2, wherein
the sensor unit (40) further comprises a module for detection of a first orientation (56) and a first position (57) of the power generating structures (15).

4. The apparatus (10) according to any one of the preceding claims, wherein
the sensor unit (40) comprises a sensor controller (39) for adjusting an orientation of the sensor unit (40) relative to the carrier unit (20); and
an adjustment of trajectory information (90) can be performed by the sensor controller (39).

5. The apparatus (10) according to any one of the preceding claims, wherein
the sensor unit (40) comprises a second memory (62B) for storing feature data from the current structure information (46) of the power generating structures (15).

6. The apparatus (10) according to any one of the preceding claims, wherein
the control unit (25) comprises current structure information (46) of the power generating structure (15); and
the current structure information (46) comprises at least one of structure features (41) and the feature positions (42).

7. A method for calculating trajectory information (90), the method comprising:
obtaining trajectory information (90) by a control unit (25) from a first communication unit (35) generated by a command center (80);
adjusting the trajectory information (90) of a carrier unit (20) by the control unit (25), wherein the control unit (25) comprises a first processor (61A) connected to a first memory (62A) and to a calibration module (27);
detecting an orientation (56) of power generating structures (15) by a sensor unit (40);
evaluating the orientation (56) by a calibration module (27); and
calibrating, by the calibration module (27), the trajectory information (90) comprising at least a location indication and a direction
wherein
the calibration module (27) comprises an element for determining a barometric height and a geometric height and/or an element for superimposing the trajectory information (90) with position information (85) generated by the sensor unit (40), and
wherein the calibration module (27) superimposes the position information (85) generated by the sensor unit (40) with the received trajectory information (90) and determines deviations therefrom, and
the control unit (25) uses the determined deviations for correction of the trajectory information (90) stored in the first memory (62A),
and wherein the calibration module (27) generates a local reference system with respect to the detected position information (85) for the calibration of the trajectory information (90).

## Revendications

1. Dispositif (10) pour inspection autonome de structures de production d'énergie (15), le dispositif (10) comprenant :
une unité de capteur (40) montée à une unité de support (20) pour détecter des informations de structure actuelles (46) concernant les structures de production d'énergie (15) ;
une unité de commande (25) rapportée à l'unité de support (20) et connectée à une première unité de communication (35), dans lequel l'unité de commande (25) comprend des informations de trajectoire (90) pour déterminer une trajectoire de l'unité de support (20), et dans lequel l'unité de commande (25) comprend un premier processeur (61A) connecté à une première mémoire (62A) et un module de calibration (27) ;
un centre de commande (80) pouvant être connecté à la première unité de communication (35) ;
des informations de structure historiques (47) stockées dans un ordinateur de commande (81) rapporté dans le centre de commande (80) ; et
une base de données de caractéristique (45) comprenant des informations de structure historiques (47) des structures de production d'énergie (15) inspectées,
dans lequel
le premier processeur (61A) est utilisé pour calculer des informations de trajectoire (90),
le module de calibration (27) comprend un élément pour déterminer une hauteur barométrique et une hauteur géométrique et/ou un élément pour superposer les informations de trajectoire (90) avec des informations de position (85) générées par l'unité de capteur (40), et
et le module de calibration (27) peut superposer les informations de position (85) générées par l'unité de capteur (40) avec les informations de trajectoire (90) reçues et peut en déterminer des écarts, dans lequel l'unité de commande (25) peut utiliser les écarts déterminés pour corriger les informations de trajectoire (90) stockées dans la première mémoire (62A),
et dans lequel le module de calibration (27) peut générer un système de référence local par rapport aux informations de position (85) détectées pour la calibration des informations de trajectoire (90).

2. Dispositif (10) selon la revendication 1, dans lequel
l'unité de capteur (40) comprend au moins l'un parmi un capteur optique (51), un capteur thermique (50), un capteur de distance laser (55), un capteur radar (52), un capteur à ultrasons (53), un capteur électrochimique (54) ou un éclairage (65).

3. Dispositif (10) selon les revendications 1 et 2, dans lequel
l'unité de capteur (40) comprend en outre un module pour détecter une première orientation (56) et une première position (57) des structures de production d'énergie (15).

4. Dispositif (10) selon l'une quelconque des revendications précédentes, dans lequel
l'unité de capteur (40) comprend un dispositif de commande de capteur (39) pour ajuster une orientation de l'unité de capteur (40) par rapport à l'unité de support (20) ; et
un ajustement d'informations de trajectoire (90) peut être effectué par le dispositif de commande de capteur (39).

5. Dispositif (10) selon l'une quelconque des revendications précédentes, dans lequel
l'unité de capteur (40) comprend une deuxième mémoire (62B) pour stocker des données de caractéristique à partir des informations de structure actuelles (46) des structures de production d'énergie (15).

6. Dispositif (10) selon l'une quelconque des revendications précédentes, dans lequel
l'unité de commande (25) comprend des informations de structure actuelles (46) de la structure de production d'énergie (15) ; et
les informations de structure actuelles (46) comprennent au moins l'une parmi des caractéristiques de structure (41) et des positions de caractéristique (42).

7. Procédé de calcul d'informations de trajectoire (90), le procédé comprenant :
obtention d'informations de trajectoire (90) par une unité de commande (25) d'une première unité de communication (35) générées par un centre de commande (80) ;
ajustement des informations de trajectoire (90) d'une unité de support (20) par l'unité de commande (25), dans lequel l'unité de commande (25) comprend un premier processeur (61A) connecté à une première mémoire (62A) et un module de calibration (27) ;
détection d'une orientation (56) de structures de production d'énergie (15) par une unité de capteur (40) ;
évaluation de l'orientation (56) par un module de calibration (27) ; et
calibration, par le module de calibration (27), des informations de trajectoire (90), comprenant au moins une indication d'emplacement et une direction,
dans lequel
le module de calibration (27) comprend un élément pour déterminer une hauteur barométrique et une hauteur géométrique et/ou un élément pour superposer les informations de trajectoire (90) avec des informations de position (85) générées par l'unité de capteur (40), et
dans lequel le module de calibration (27) superpose les informations de position (85) générées par l'unité de capteur (40) avec les informations de trajectoire (90) reçues et en détermine des écarts, et
l'unité de commande (25) utilise les écarts déterminés pour corriger les informations de trajectoire (90) stockées dans la première mémoire (62A),
et dans lequel le module de calibration (27) génère un système de référence local par rapport aux informations de position (85) détectées pour la calibration des informations de trajectoire (90).
